# EUROPÄISCHE PATENTSCHRIFT

(11) **EP 1 813 376 B1**
(45) Veröffentlichungstag und Bekanntmachung des Hinweises auf die Patenterteilung: **19.08.2009**
(21) Anmeldenummer: 07000315.7
(22) Anmeldetag: 09.01.2007
(51) Int. Cl.: B23K 20/12, B23K 35/02

(54) **Befestigungselement zur Reibschweißverbindung mit einem flächigen Bauteil**
Fastening element for being friction welded to a flat component
Elément de fixation destiné à être soudé par friction à un élément plat

(30) Priorität: 26.01.2006 DE 102006003806
(43) Veröffentlichungstag der Anmeldung: 01.08.2007
(73) Patentinhaber: EJOT GmbH & Co. KG, 57334 Bad Laasphe (DE)
(72) Erfinder: Christ, Eberhard, Dr., 99897 Tambach-Dietharz (DE)
(74) Vertreter: Bardehle, Heinz

(56) Entgegenhaltungen:
- WO-A-20/06008122
- DE-A1- 10 143 915
- DE-A1- 19 642 331
- DE-U1-4202005 017 52

## Beschreibung

Die Erfindung bezieht sich auf ein Befestigungselement mit einen konzentrischen Ringwulst aufweisenden Reibschweißfläche zur Reibschweißverbindung mit einem flächigen Bauteil durch auf das Befestigungselement wirkende Rotationskraft und Presskraft gegen das Bauteil.

Ein derartiges Befestigungselement ist in der DE 196 42 331 C2 dargestellt. Es handelt sich dabei um einen Bolzen mit einem an dem Ende des Bolzens angeordneten Flansch, der auf seiner dem Bolzen abgewandten Seite einen konzentrischen Ringwulst aufweist. Dieser Ringwulst liegt am radialen Ende des Flansches und umrundet eine zentrale Ausnehmung. Die Reibfläche des Ringwulstes ist ballig ausgebildet, so dass sich an dem Bolzen eine ringförmige linienhafte Reibfläche ergibt. Der bekannte Bolzen lässt beim Reibschweißvorgang durch sein Rotieren und Andrücken an ein Bauteil die notwendige Wärme für das Anschmelzen der Berührungsflächen entstehen.

Es ist darüber hinaus aus der DE 199 27 369 A1 Figur g ein Befestigungselement bekannt, bei dem es sich um einen Bolzen mit einem an dem einen Ende des Bolzens angeordneten Flansch handelt, der auf seiner dem Bolzen abgewandten Seite einen konzentrischen Ringwulst aufweist. Die Reibfläche des Ringwulstes ist eben ausgebildet, so dass sich an dem Bolzen eine ringförmige flache Reibfläche ergibt, die mit erheblichem Querschnitt an einem flächigen Bauteil durch Reibschweißen zu befestigen ist.

Ferner ist aus der DE-U-202005017524 ein Befestigungselement bekannt, welches mit einer zentralen abgerundeten Spitze versehen ist, die von einer kegelige Mantelfläche und einer gegenüber der Spitze axial zurücktretenden Schulter umgegeben ist.

Der Erfindung liegt die Aufgabe zugrunde, der Reibschweißverbindung einen Schutz gegen Korrosion und sonstige chemische Beeinflussung zu geben. Erfindungsgemäß geschieht dies dadurch, dass die Reibschweißfläche von einer mit einem Lot beschichteten, kreisrunden koaxialen Reiblötfläche eingefasst ist, wobei die Reibschweißfläche axial gegenüber der Reiblötfläche um eine Länge vorspringt, die im Wesentlichen nur das für das Reibschweißen erforderliche Material enthält.

Aufgrund dieser Gestaltung des Befestigungselementes ergibt sich eine zwangsläufige Folge von Reibschweißen und Reiblöten dadurch, dass zunächst die gegenüber der Reiblötfläche vorspringende Reibschweißfläche in Berührungskontakt mit dem flächigen Bauteil tritt, so dass hier der Reibschweißvorgang eingeleitet und ausgeführt werden kann, wobei das zum Reibschweißen erforderliche Material aus dem Ringwulst in der Reibschweißverbindung aufgeht. Dabei nähert sich das Befestigungselement dem Bauteil an und kommt mit seiner Reiblötfläche in Berührung mit dem Bauteil, so dass die vom Reibschweißvorgang sowieso schon vorgewärmte Reiblötfläche schnell die für das Reiblöten erforderliche Temperatur annimmt, um das auf der Reiblötfläche und gegebenenfalls auch auf dem Bauteil befindliche Lot zum Schmelzen zu bringen. Hierdurch ergibt sich ein ringförmiges Einschließen der Reibschweißverbindung durch die nunmehr auch entstandene Reiblötverbindung, die die Reibschweißverbindung dicht einschließt und gegen jeden Einfluss von außen, insbesondere Korrosion und sonstigen chemischen Einfluss, schützt. Der Übergang vom Reibschweißen zum Reiblöten findet dabei kontinuierlich statt, ohne dass es zu einer Unterbrechung des Vorgangs der Rotation und des Andrückens des Befestigungselements gegen das Bauteil kommt, womit also ein funktionsmäßig in sich geschlossener Vorgang abläuft, bei dem im Effekt automatisch der Schutz der Reibschweißverbindung hergestellt wird.

Für die Herstellung der Reiblötverbindung eignet sich insbesondere ein Überzug des Bauteils aus Zink bzw. eine Beschichtung der Reiblötfläche mit Zink, das den Vorteil hat, dass für das Reiblöten gegenüber dem Reibschweißen eine relativ geringe Temperatur erforderlich ist. Zum Reibschweißen eines verzinkten Eisen ist eine Reibschweißtemperatur von ca. 1100°C - 1200°C erforderlich, während für das Reiblöten unter Benutzung der Verzinkung mit Temperaturen von ca. 300°C - 400°C auskommt. Selbstverständlich können natürlich auch andere Lote für das Reiblöten verwendet werden, z.B. Zinn- und Kupferlegierungen oder dergleichen. Dabei kann es bei ausreichender Dicke z.B. einer Verzinkung eines Eisenblechs möglich sein, aus dieser Verzinkung das notwendige Material für den Reiblötvorgang zu gewinnen. Es ist aber auch möglich, nur die Reiblötfläche an dem Befestigungselement mit einer Zinkschicht oder dergleichen zu versehen, um den Reiblötvorgang durchzuführen. Eine besonders sichere Reiblötverbindung ergibt sich dann, wenn sowohl das Bauteil als auch die Reiblötfläche mit Lötmaterial beschichtet sind.

Zweckmäßig wird die Reibschweißfläche von der Reiblötfläche durch eine Ringnut getrennt. In dieser Ringnut können beim Reibschweißen entstehender Abrieb, insbesondere Schmelzereste und Schmutzpartikel, aufgenommen werden, die dann den Reibschweißvorgang und insbesondere den folgenden Reiblötvorgang nicht stören können.

Die Reibschweißfläche kann man flach mit einer leichten Schrägrichtung verlaufen lassen, wobei die Schräge entweder nach innen zu oder nach außen zu gerichtet sein kann. Aufgrund der Schräge bildet sich dann an der axial höchsten Stelle der Reibschweißfläche eine Kante aus, die für ein Zentrieren des Befestigungselements bei dessen Rotation und Anpressen gegen das Bauteil sich vorteilhaft auswirkt. Im Falle einer nach innen zu verlaufenden Schräge, in der sich also nach innen zu der Abstand der Reibschweißfläche von dem Bauteil vergrößert, ergibt sich die Tendenz, Schmelzereste und Schmutzpartikel nach innen zu wegzufördern, wogegen im Falle einer umgekehrt liegenden Schräge, bei der also innen die axial höchste Erhebung der Reibschweißfläche vorliegt, derartige Materialien nach außen weggefördert werden. In diesem Falle können die erwähnten Abfallprodukte nach außen zu von der Ringnut aufgenommen werden.

Vorteilhaft wird die Reibschweißfläche im Querschnitt ballig ausgebildet. Aufgrund dieser Gestaltung ergibt sich bei der Berührung der balligen Reibschweißfläche mit dem Bauteil eine konzentrische schmale Berührungslinie, die automatisch zu einer Zentrierung des Befestigungselements beim Reibschweißen führt.

Das Gleiche gilt für die Ausbildung der Reiblötfläche, auch diese kann ballig ausgebildet sein, wodurch der Reiblötvorgang kontinuierlich von einer mittleren Berührungslinie radial nach innen und nach außen zu sich ausbildet und damit eine gleichmäßige Verlötung entsteht.

Das Befestigungselement kann man entweder als Bolzen oder als Mutter ausbilden, da sich in beiden Fällen der gewünschte Schutzeffekt für die Reibschweißverbindung aufgrund des Vorhandenseins der Reiblötverbindung ergibt.

Die Reibschweißfläche versieht man vorteilhaft mit mindestens einer Radialnut, die beim Reibschweißen eine Öffnung zwischen den Bereichen innerhalb des Reibschweißens und außerhalb des Reibschweißens bildet. Durch diese Verbindung können entstehende Dämpfe oder flüchtige Verunreinigungen nach außen abgeführt werden, die anderenfalls von dem durch die Reibschweißverbindung gebildeten Innenraum eingeschlossen sein würden. Lacke und Beschichtungen können abgeschabt werden. Die Radialnut ist so schmal, dass sie praktisch keine Beeinträchtigung der Festigkeit der Reibschweißverbindung mit sich bringt. Die gleichen Überlegungen gelten auch dann, wenn die Reiblötfläche mit mindestens einer Radialnut versehen ist.

Um das Befestigungselement mit dem erforderlichen Druck gegen das Bauteil in Drehung zu versetzen, versieht man das Bauelement zweckmäßig mit einem Mitnehmer, der vorteilhafterweise als Sechskant ausgebildet sein kann.

In den Figuren sind Ausführungsbeispiele der Erfindung dargestellt:

Es zeigen
- Figur 1a: das als Bolzen ausgebildete Befestigungselement mit einer Reibschweißfläche und daran direkt anschließender Reiblötfläche;
- Figur 1b: eine axiale Draufsicht auf das Befestigungselement gemäß Figur 1a;
- Figur 2: ein der Gestaltung gemäß Figur 1 ähnliches Befestigungselement, bei dem zwischen Reibschweißfläche und Reiblötfläche eine Ringnut angeordnet ist;
- Figur 3a: ebenfalls ein ähnliches Befestigungselement, bei dem die Reibschweißfläche abgeschrägt ist und zwar abfallend nach außen hin;
- Figur 3b: eine Abwandlung der Gestaltung gemäß Figur 3a in dem Sinne, dass die Reibschweißfläche nach innen zu abfällt;
- Figur 4: eine Gestaltung eines Befestigungselementes mit Reibschweißfläche und Reiblötfläche mit einer bei beiden Flächen vorhandenen balligen Ausbildung;
- Figur 5a: ein Befestigungselement, dass weitgehend demjenigen gemäß Figur 2 entspricht, jedoch mit radialen Nuten sowohl in der Reibschweißfläche als auch der Reiblötfläche;
- Figur 5b: eine axiale Ansicht des Befestigungselementes gemäß Figur 5a mit Blick auf die Reibschweißfläche und die Reiblötfläche;
- Figuren 6a und 6b: ein als Mutter ausgebildetes Befestigungselement mit einer Gestaltung von Reibschweißfläche und Reiblötfläche gemäß Figur 2, sowohl in Seitensicht als auch in Draufsicht;
- Figur 7a und 7b: eine Gestaltung des Befestigungselementes ähnlich demjenigen gemäß Figur 2, bei dem für den Antrieb des Befestigungselementes ein Mitnehmer, und zwar ein Sechskant vorgesehen ist;
- Figur 8: das Befestigungselement gemäss Figur 3a, angeschweisst an ein Blechteil.

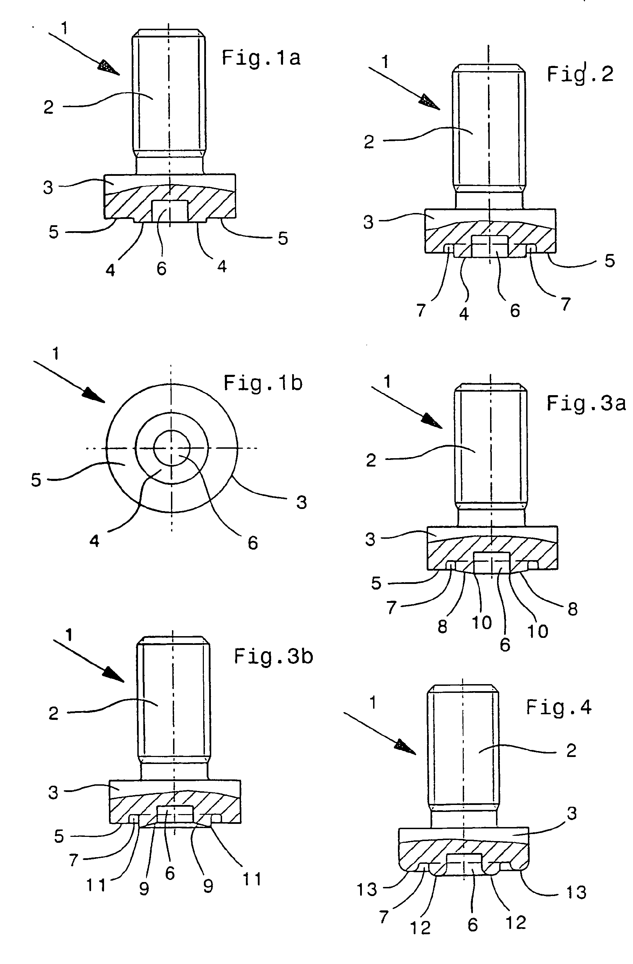

In der Figur 1 ist das Befestigungselement 1, gebildet durch einen Bolzen, dargestellt, das auf seiner einen Seite den Gewindeschaft 2 und auf seiner anderen Seite den Flansch 3 aufweist, der auf seiner dem Gewindeschaft 2 abgewandten Seite mit der Reibschweißfläche 4 und mit der Reiblötfläche 5 versehen ist. In der Mitte der Reibschweißfläche 4 ist die Vertiefung 6 gebildet, von der irgendein Abrieb (Schmelzereste und Schmutzpartikel) aufgenommen werden können.

Figur 1b zeigt das Befestigungselement 1 gemäß Figur 1a in einer Sicht auf die Reibschweißfläche 4 und die Reiblötfläche 5.

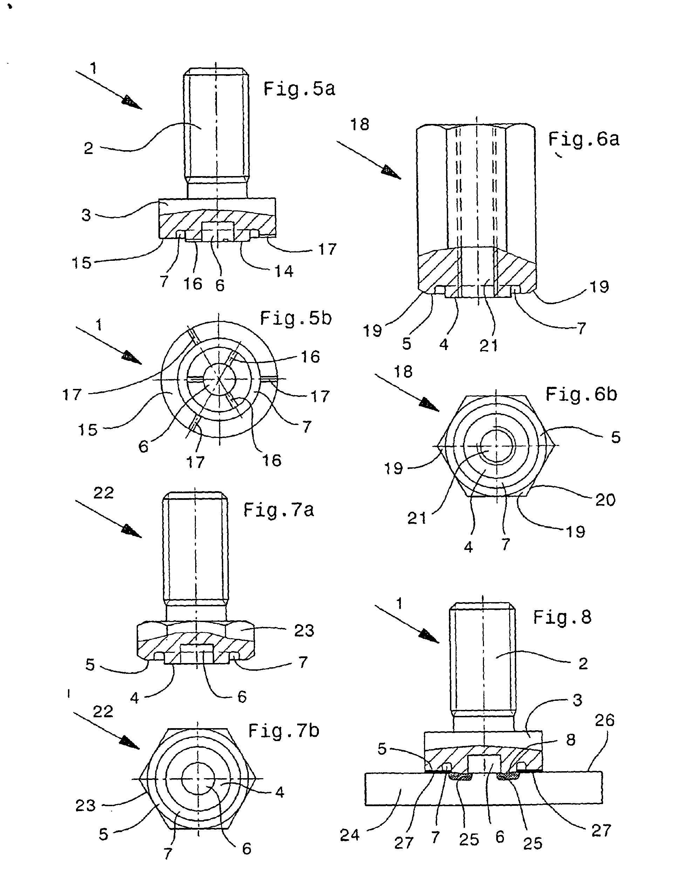

Wie die Figur 1a zeigt, tritt die Reibschweißfläche 4 gegenüber der Reiblötfläche 5 geringfügig vor (in der Praxis etwa 0,2 bis 1,0 mm), was beim Andrücken des Befestigungselementes gegen ein flächiges Bauteil dazu führt, dass bei Rotation des Befestigungselementes 1 zunächst die Reibschweißfläche 4 erhitzt wird und mit der Oberfläche des Bauteiles verschmilzt, wobei sich das Material aus der Reibschweißfläche 4 mit dem Material des Bauteils vermischt (siehe Figur 8). Hierdurch wird das Befestigungselement 1 mit seinem Flansch 3 näher an das Bauteil herangeführt, bis schließlich auch die Reiblötfläche 5 in Berührungskontakt mit der Oberfläche des Bauteils tritt und aufgrund der vom Reibschweißen her rührenden Vorerwärmung von Bauteil und Flansch 3 schnell zu einem Aufschmelzen eines im Bereich der Reiblötfläche 5 befindenden Lotes führt, so dass schließlich die Reiblötfläche 5, die die Reibschweißfläche 4 vollständig umgibt, sich mit dem Bauteil verlötet und damit die Reibschweißfläche 4 nach außen hin abschirmt. Das Material der Reibschweißfläche 4 hat dabei etwa ein solches Volumen, wie für das spätere Reibschweißen und Verbinden mit dem Material des Bauteils erforderlich ist. Es entsteht auf diese Weise eine feste Verbindung zwischen Befestigungselement 1 und dem nicht dargestellten Bauteil über die Reibschweißfläche 4, die dabei von der Reiblötfläche 5 sicher abgeschirmt ist. Bezüglich der Verbindung von Befestigungselement 1 und einem Bauteil sei auf die Darstellung zu Figur 8 verwiesen.

Das in der Figur 2 dargestellte Befestigungselement 1 entspricht weitgehend demjenigen gemäß Figur 1a und 1b. Das Befestigungselement nach Figur 2 weist im Unterschied zur Darstellung in den Figuren 1a und 1b eine Ringnut 7 zwischen der Reibschweißfläche 4 und der Reiblötfläche 5 auf. Diese Ringnut, die konzentrisch zu der kreisringförmig angeordneten Reibschweißfläche 4 und Reiblötfläche 5 angeordnet ist, dient dazu, beim Reibschweißen auch nach außen hin wegfließende Verschmutzungen bzw. Materialreste aufzufangen, die damit von der Reiblötverbindung 5 sicher fern gehalten werden.

In den Figuren 3a und 3b sind Befestigungselemente 1 dargestellt, die weitgehend demjenigen gemäß Figur 2 entsprechen. In den Figuren 3a und 3b ist lediglich die Reibschweißfläche 8 bzw. 9 mit einer leichten Schräglage angeordnet, was dazu führt, dass sich je nach Richtung der Schräglage bei der Ausführung gemäß Figur 3a eine innere Kante 10 der Reibschweißfläche und bei der Ausführungsform gemäß Figur 3b eine äußere Kante 11 der Reibschweißfläche 9 ausbildet. Mit der Kante 10 bzw. 11 ergibt sich bei Aufsetzen des Befestigungselementes 1 auf ein Bauteil und Rotation besonders intensiver Zentrierungseffekt, was ein eventuelles Schlingern beim Rotieren des Befestigungselementes weitgehend verhindert. Darüber hinaus erzielt man mit der abgeschrägten Reibschweißfläche 8 bzw. 9 den Effekt, dass die intensive Erhitzung bei Rotation und Anpressen zunächst nur im Bereich der Kante 10 bzw. 11 entsteht, von wo aus dann die Erweichung des betreffenden Materials nach außen zu bzw. nach innen zu gleichmäßig fortschreitet, was für einen guten durchgehend gleichmäßigen Reibschweißvorgang von Vorteil ist. Außerdem wird durch die Abschrägung irgendwelcher Schmutz entweder besser nach außen oder besser nach innen abgeführt.

Wie oben gesagt, kann man vorteilhaft sowohl die Reißschweißfläche als auch die Reiblötfläche im Querschnitt ballig ausbilden. Ein Ausführungsbeispiel hierfür zeigt die Figur 4, in der sowohl die Reibschweißfläche 12 als auch die Reiblötfläche 13 ballig ausgebildet ist. Es sei jedoch darauf hingewiesen, dass es natürlich auch möglich ist, entweder nur die Reibschweißfläche oder nur die Reiblötfläche ballig auszubilden. Aufgrund der balligen Ausbildung von Reibschweißfläche 12 ergibt sich beim Aufsetzen des Befestigungselements 1 auf ein Bauteil zunächst eine linienhafte Berührung mit entsprechend intensiver konzentrierter Erhitzung, was der Schnelligkeit der Durchführung des Reibschweißvorganges zugute kommt. Die Schmelzezone bzw. Lötzone bildet sich dabei von dem jeweils zentralen Berührungsring gegenüber dem Bauteil linear nach außen bzw. innen hin aus, was die notwendige Wärmezufuhr erleichtert.

In den Figuren 5a und 5b ist ein Befestigungselement 1 ähnlich demjenigen gemäß Figur 2 dargestellt, bei dem sowohl die Reibschweißfläche 14 als auch die Reiblötfläche 15 jeweils Radialnuten 16 und 17 enthält, die besonders deutlich aus Figur 5b ersichtlich sind (Draufsicht auf die betreffende Seite des Befestigungselementes 1). Die Radialnuten 16 bzw. 17 bewirken einerseits eine besonders starke Reibung gegenüber dem betreffenden Bauteil, andererseits sorgen sie für eine sichere Abfuhr von irgendwelchen Schmelzeresten aufgrund der von ihnen ausgeübten Zentrifugalkräfte. Die Radialnuten 16 bzw. 17 besitzen nur eine geringe Tiefe, wie dies die Figur 5a zeigt, sie beeinträchtigen daher die Festigkeit der späteren Reibschweißverbindung bzw. Reiblötverbindung praktisch überhaupt nicht, sie sind jedoch für das Abführen von irgendwelchen Schmutzteilen, Beschichtungen und Schmelzeresten besonders gut geeignet.

Wie bereits oben dargelegt kann das Befestigungselement sowohl als Bolzen (Figuren 1 bis 5) als auch als Mutter ausgebildet sein. Hierzu wird auf die Mutter 18 in Figuren 6a und 6b verwiesen. Die Mutter 18 weist auf ihrer einen Stirnseite eine Gestaltung auf, wie diese der Gestaltung gemäß Figur 2 entspricht. Die Mutter besitzt als Mitnehmer den Sechskant 20, der z.B. für die Aufnahme in einem Rotationswerkzeug dienen kann. Die Mutter 18 besitzt das Gewindeloch 21 und an ihrem Rand im Bereich der Reiblötfläche 5 die Abschrägung 19, mit der eine Scharfkantigkeit des betreffenden Bereichs vermieden wird. Im übrigen bewirkt die Abschrägung 19, dass sich eine außen vollständig abgerundete saubere Reiblötfläche und damit Lötverbindung ergibt, wie dies aus der Draufsicht in Figur 6b deutlich ersichtlich ist.

In den Figuren 7a und 7b ist das als Bolzen ausgebildete Befestigungselement 22 mit einem Sechskantflansch 23 wiedergegeben, wobei die Seite des Flansches 23 mit der Reibschweißfläche 4 und der Reiblötfläche 5 der diesbezüglichen Darstellung in Figur 6a entspricht. Der Flansch 23 ist hier als Sechskant ausgebildet, womit sich für den Antrieb dieses Befestigungselementes in gleicher Weise wie beim Ausführungsbeispiel gemäß Figur 6a eine günstige Erfassung durch ein Rotationswerkzeug ergibt.

In der Figur 8 ist das Befestigungselement 1 gemäß Figur 3a angeschweißt an ein das flächige Bauteil darstellende Blechstück 24 dargestellt. An das Blechstück 24 ist der Flansch 3 des Befestigungselementes 1 angedrückt, und zwar derart, dass sich die Reibschweißfläche 8 mit dem Blechteil 24 in der Reibschweißzone 25 verschweißt, während sich die Reiblötfläche 5 mit der betreffenden Oberfläche 26 des Blechteils 24 durch die Lötzone 27 verbindet, in der z.B. eine Zinkbeschichtung auf der Oberfläche 26 und auf der Reiblötfläche 5 miteinander verschmelzen, also hier die Verlötung zwischen den betreffenden Teilen von Blechteil 24 und Befestigungselement 1 bilden. Aus Figur 8 geht deutlich hervor, dass sich die Lötzone 27 um die Schweißzone 25 herum schließt und damit die für das Festhalten des Befestigungselementes 1 am Blechteil 24 verantwortliche Lötzone 25 sicher vor irgendwelchen Einflüssen wie Korrosion und dergleichen schützt.

## Patentansprüche

1. Befestigungselement (1, 18, 22) mit einer Reibschweißfläche (4, 8, 9, 12, 14) zur Reibschweißverbindung mit einem flächigen Bauteil (24) durch auf das Befestigungselement (1, 18, 22) wirkende Rotationskraft und Presskraft gegen das Bauteil (24), **dadurch gekennzeichnet, dass** die Reibschweißfläche (4, 8, 9, 12, 14) von einer mit einem Lot beschichteten, kreisrunden koaxialen Reiblötfläche (5, 13, 15) eingefasst ist, wobei die Reibschweißfläche (4, 8, 9, 12, 14) axial gegenüber der Reiblötfläche (5, 13, 15) um eine Länge vorspringt, die im Wesentlichen nur das für das Reibschweißen erforderliche Material enthält.

2. Befestigungselement nach Anspruch 1, **dadurch gekennzeichnet, dass** die Reibschweißfläche (4, 8, 9, 12, 14) von der Reiblötfläche (5, 13, 15) durch eine Ringnut (7) getrennt ist.

3. Befestigungselement nach Anspruch 1 oder 2, **dadurch gekennzeichnet, dass** die Reibschweißfläche (9, 8) in radialer Richtung schräg verläuft.

4. Befestigungselement nach Anspruch 1 oder 2, **dadurch gekennzeichnet, dass** die Reibschweißfläche im Querschnitt (12) ballig ausgebildet ist.

5. Befestigungselement nach einem der Ansprüche 1 bis 4, **dadurch gekennzeichnet, dass** die Reiblötfläche (13) ballig ausgebildet ist.

6. Befestigungselement nach einem der Ansprüche 1 bis 5, **gekennzeichnet durch** eine Ausbildung als Bolzen (1).

7. Befestigungselement nach einem der Ansprüche 1 bis 5, **gekennzeichnet durch** eine Ausbildung als Mutter (18).

8. Befestigungselement nach einem der Ansprüche 1 bis 7, **dadurch gekennzeichnet, dass** die Reibschweißfläche (14) mindestens eine Radialnut (16) aufweist.

9. Befestigungselement nach einem der Ansprüche 1 bis 7, **dadurch gekennzeichnet, dass** die Reiblötfläche (15) mindestens eine Radialnut (17) aufweist.

10. Befestigungselement nach einem der Ansprüche 1 bis 9, **gekennzeichnet durch** einen Mitnehmer (20, 23) für die Einleitung der Rotations- und der Presskraft.

11. Befestigungselement nach Anspruch 10, **dadurch gekennzeichnet, dass** der Mitnehmer (20, 23) als Sechskant ausgebildet ist.

## Claims

1. A fastening element (1, 18, 22) with a friction-welding surface (4, 8, 9, 12, 14) for being friction-welded to a flat component (24) through a rotational force acting on said fastening element (1, 18, 22) and a pressing force against said component (24), **characterized in that** said friction-welding surface (4, 8, 9, 12, 14) is bordered by a circular coaxial friction-soldering surface (5, 13, 15) which is coated with solder, which friction-welding surface (4, 8, 9, 12, 14) projects axially relative to said friction-soldering surface (5, 13, 15) by a length that essentially only contains the material required for friction welding.

2. The fastening element of claim 1, **characterized in that** said friction-welding surface (4, 8, 9, 12, 14) is separated from said friction-soldering surface (5, 13, 15) by an annular groove (7).

3. The fastening element of claims 1 or 2, **characterized in that** said friction-welding surface (9, 8) is sloped in the radial direction.

4. The fastening element of claims 1 or 2, **characterized in that** said friction-welding surface is of a convex cross-section (12).

5. The fastening element of one of claims 1 to 4, **characterized in that** said friction-soldering surface (13) is of a convex shape.

6. The fastening element of one of claims 1 to 5, **characterized in that** it is in the form of a bolt (1),

7. The fastening element of one of claims 1 to 5, **characterized in that** it is in the form of a nut (18).

8. The fastening element of one of claims 1 to 7, **characterized in that** said friction-welding surface (14) includes at least one radial groove (16).

9. The fastening element of one of claims 1 to 7, **characterized in that** said friction-soldering surface (15) includes at least one radial groove (17).

10. The fastening element of one of claims 1 to 9, **characterized by** a driver (20, 23) for applying said rotational and pressing forces.

11. The fastening element of claim 10, **characterized in that** said driver (20, 23) is in the form of a hexagon.

## Revendications

1. Elément de fixation (1, 18, 22) avec une surface à souder par friction (4, 8, 9, 12, 14) destiné à être soudé par friction à un élément plat (24) par pression par rotation et par filage à l'élément de fixation (1, 18, 22) contre l'élément (14), **caractérisé en ce que**, la surface à souder par friction (4, 8, 9, 12, 14) est bordée par une surface à braser par friction coaxialement circulaire et revêtue d'un parement (5, 13, 15) par un métal d'apport de brasage, où la surface à souder par friction (4, 8, 9, 12, 14) fait axialement saillie d'une longueur contre la surface à braser par friction (5, 13, 15), qui ne contient essentiellement que le matériau nécessaire pour la soudure par friction.

2. Elément de fixation selon revendication 1, **caractérisé en ce que**, la surface destinée à être soudée par friction (4, 8, 9, 12, 14) est séparée par une rainure circulaire de la surface à souder par friction.

3. Elément de fixation selon revendication 1 ou 2, **caractérisé en ce que**, la surface destinée à être soudée par friction (9, 8) est inclinée en direction radiale.

4. Elément de fixation selon revendication 1 ou 2, **caractérisé en ce que**, la surface destinée à être soudée par friction (9, 8) est transversalement (12) bombée.

5. Elément de fixation selon l'une des revendications 1 à 4, **caractérisé en ce que**, la surface à souder par friction (13) est bombée.

6. Elément de fixation selon l'une des revendications 1 à 5, **caractérisé par le fait qu'**il est conçu sous forme de boulon (1).

7. Elément de fixation selon l'une des revendications 1 à 5, **caractérisé par le fait qu'**il est conçu sous forme d'écrou (18).

8. Elément de fixation selon l'une des revendications 1 à 7, **caractérisé en ce que**, la surface destinée à être soudée par friction (14) présente au moins une rainure radiale (16).

9. Elément de fixation selon l'une des revendications 1 à 7, **caractérisé en ce que**, la surface destinée à être brasée par friction (14) présente au moins une rainure radiale (17).

10. Elément de fixation selon l'une des revendications 1 à 9, **caractérisé par** un entraîneur (20, 23) pour l'introduction de la pression par rotation et par filage.

11. Elément de fixation selon revendication 10, **caractérisé en ce que** l'entraîneur (20, 23) est conçu sous forme hexagonale.
